Europäisches Patentamt

European Patent Office

Office européen des brevets

(11) Numéro de publication: **0 055 167 B1**

(12) **FASCICULE DE BREVET EUROPEEN**

(45) Date de publication du fascicule du brevet: **01.06.88**

(51) Int. Cl.⁴: **G 09 G 1/16, H 04 N 7/087**

(21) Numéro de dépôt: **81401983.2**

(22) Date de dépôt: **11.12.81**

(54) **Procédé et dispositif pour la visualisation de messages sur un dispositif d'affichage à trame balayée tel qu'un écran d'un tube à rayons cathodiques par utilisation d'un ensemble mémoire composite.**

(30) Priorité: **12.12.80 FR 8026392**

(43) Date de publication de la demande:
**30.06.82 Bulletin 82/26**

(45) Mention de la délivrance du brevet:
**01.06.88 Bulletin 88/22**

(84) Etats contractants désignés:
**DE FR GB IT NL**

(56) Documents cités:
**BE-A- 877 603**
**DE-A-2 839 888**
**FR-A-2 211 822**
**FR-A-2 406 250**
**US-A-3 996 584**
**US-A-4 129 859**
**US-A-4 141 003**

**IEEE Transactions on Consumers Electronics,
vol. CE-25, no. 3, juillet 1979, pp. 334-338, P.
Frandon, G. Chauvel, "ANTILOPE LST"**

(73) Titulaire: **TEXAS INSTRUMENTS FRANCE
Société dite:
F-06270 Villeneuve Loubet (FR)**
(84) **FR**

(73) Titulaire: **TEXAS INSTRUMENTS
INCORPORATED
13500 North Central Expressway
Dallas Texas 75265 (US)**
(84) **DE GB IT NL**

(72) Inventeur: **Chauvel, Gérard
10 Avenue des Chênes
F-06800 Cagnes Sur Mer (FR)**

(74) Mandataire: **Moncheny, Michel et al
c/o Cabinet Lavoix 2 Place d'Estienne d'Orves
F-75441 Paris Cedex 09 (FR)**

Courier Press, Leamington Spa, England.

EP 0 055 167 B1

## Description

La présente invention concerne, d'une façon générale l'affichage de messages sur un dispositif d'affichage à trame balayée tel qu'un écran à tube cathodique utilisé notamment en tant que terminal de systèmes de traitement d'information.

Plus particulièrement, l'invention concerne l'édition, la transmission et la réception pour la visualisation de messages contenant des données de composition de pages destinées à être visualisées sur l'écran d'un tube à rayons cathodiques. Un système permettant la réalisation de ces opérations est appelé communément système de télétexte.

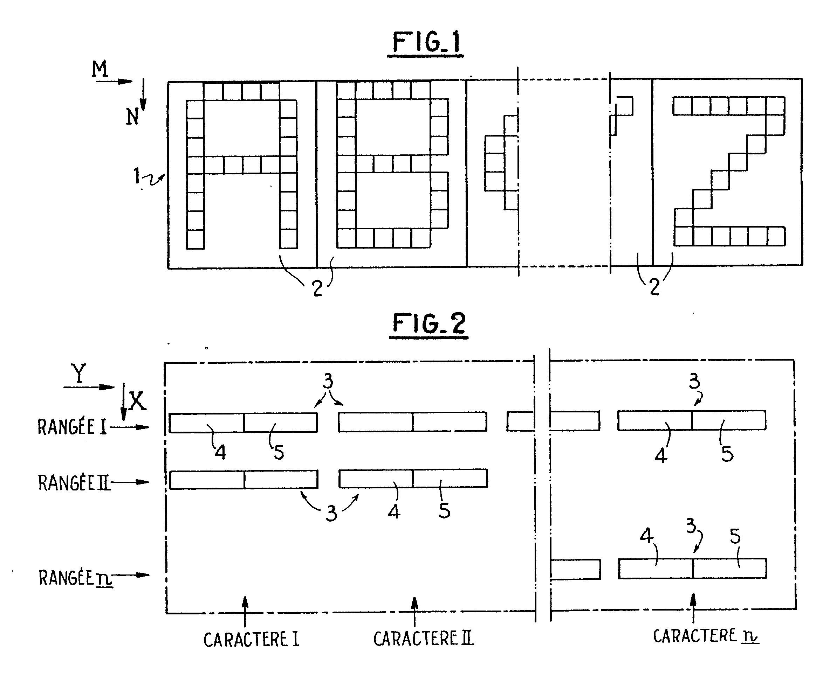

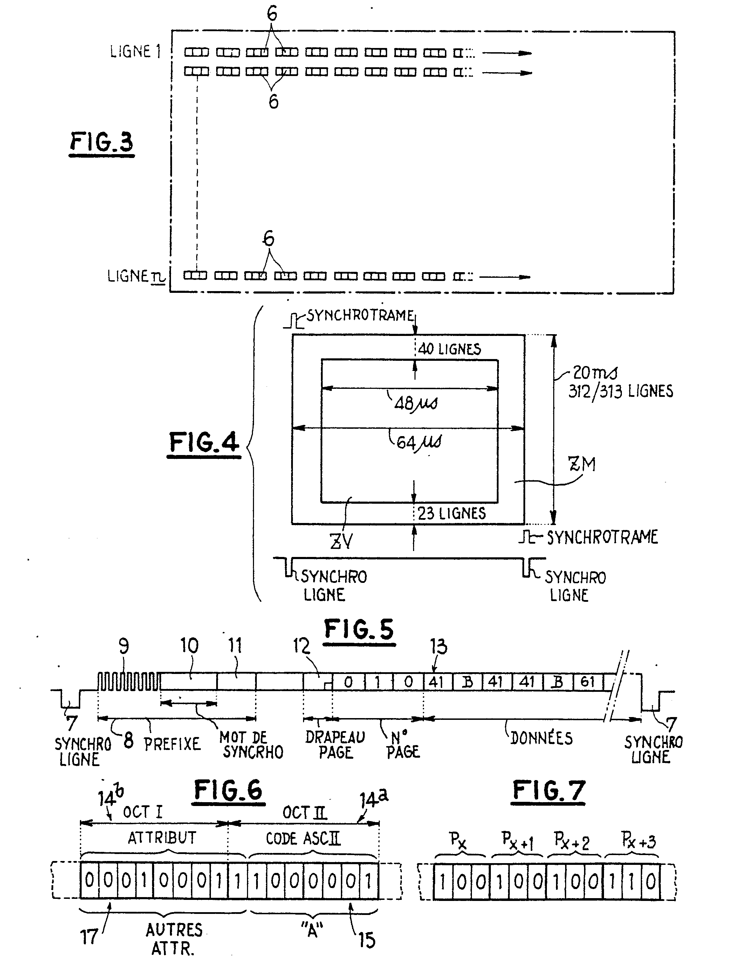

D'après DA1—2 839 888, on connait un montage de sélection d'une image de télévision parmi les données d'images qui sont stockées dans une mémoire d'images BSP (Figure 1). A cet effet, on assigne à l'adresse de début de la partie d'image à représenter, des coordonnées perpendiculaires XJ et XJ selon la formule qui figure à la page 14 du document. Les coordonnées sont introduites dans le montage par un levier de commande VSS et sélectionnées à partir de compteurs de lignes et d'espaces qui sont commandés par les circuits de déviation de l'écran.

D'après BE—A—877 603, on connait un système dans lequel on prévoit deux mémoires RAM, l'une (23, Figure 2) recevant les adresses relatives aux emplacements de différents générateurs de caractères (34 à 37) et l'autre (24) des codes d'identité du modèle de caractères, ces codes étant destinées à associer un octet placé dans la RAM 23 à l'un parmi les quatre générateurs de caractères ou à d'autres commandes déterminant la forme ou la nature de l'information affichée sur l'écran. Il est à noter que chaque mémoire RAM 23 et 24 est destinée à stocker le contenu d'une même page, car comme spécifié par exemple à la page 4, lignes 9 à 11, les octets d'identité de modèle sont stockées dans la mémoire 24 aux mêmes adresses que celles des caractères de la séquence dans la mémoire RAM 23. Ceci signifie que l'information relative à une page n'est pas du tout mobile dans la mémoire et ne peut être stockée qu'à partir d'un emplacement bien déterminé dans l'une ou l'autre des mémoires 23 ou 24.

FR—A—2 388 351 décrit un dispositif servant à afficher les données sur un appareil de visualisation sous la forme d'une page, ce dispositif comprenant une liaison d'information servant à recevoir des signaux d'information, une mémoire d'avant-plan dont une entrée est reliée à une liaison d'information, dont une sortie est reliée à une entrée de l'appareil de visualisation et qui est adaptée à recueillir des informations d'une page et à garder celle-ci en mémoire pendant ledit intervalle de temps, un organe de manipulation dont une sortie est reliée à une entrée d'un dispositif de commande de manière à bloquer l'entrée de la mémoire d'avant-plan, une mémoire d'arrière-plan connecté entre la liaison d'information et la mémoire d'avant-plan et qui est adaptée pour recueillir l'information d'au moins deux pages lors du déblocage de son entrée reliée à la liaison d'information par un signal de sortie du dispositif de commande, ladite mémoire d'arrière-plan comprenant au moins deux mémoires partielles séquentielles connectées en parallèle de manière à contenir ensemble toute l'information d'une page, l'information d'une zone de caractère étant répartie sur au moins deux pages, la mémoire d'arrière-plan étant adaptée pour envoyer successivement sous la commande d'un signal d'adresse de début relative provenant du dispositif de commande, les informations d'une page jusqu'à une longueur prédéterminée de cette information dans la mémoire d'avant-plan moyennant déblocage de l'entrée de celle-ci en vue de la mise en mémoire progressive de l'information ainsi introduite à partir d'une adresse de début prédéterminée dans la mémoire d'avant-plan.

FR—A—2 211 822 concerne un procédé de transmission d'informations à travers un modulateur-démodulateur utilisant des signaux vidéo et des commandes entrelacées, adressées à un terminal particulier pouvant émettre un message en retour, les codes transmis au cours des périodes de retraçage de lignes étant destinés à identifier les signaux de commande. Il s'agit d'une méthode de transmission et non pas de visualisation comme c'est le cas dans la présente invention, les messages transmis correspondant à un terminal particulier et les signaux vidéo étant mélangés quant à leur nature graphique ou typographique.

Dans le même domaine technique, on peut également citer US—A—4 129 859 dans lequel on utilise la possibilité de changer une adresse mémoire pour afficher le décalage de rangées de caractères et le publication IBM TECHNICAL DISCLOSURE BULLETIN, volume 18, numéro 10, Mars 1976, New York, US D.A. CUMMINS et al. "Display refresh mechanism employing a multi-segmented buffer", pages 3392—3396.

D'une façon générale, les dispositifs connus de visualisation sur tube à rayons cathodiques ou autres peuvent afficher des messages selon deux modes d'affichage, le premier d'entre eux étant le mode dit typographique et l'autre étant le mode dit graphique.

Pour mettre en oeuvre le premier de ces modes, il est connu d'utiliser des jeux de caractères dont la forme est définie par des matrices composées chacune de N lignes et de M points. La Fig. 1 des dessins annexés représente schématiquement une rangée 1 de Y caractères composés à partir de telles matrices 2.

Les matrices sont mémorisées dans un ou plusieurs générateurs de caractères qui sont formés par des mémoires mortes ou par des zones correspondantes d'une mémoire composite associée au circuit commandant le tube à rayons cathodiques. Les générateurs de caractères comportent donc des positions adressables dans lesquelles sont stockées les informations nécessaires à l'affichage de chaque caractère alphanumérique que l'on se propose de visualiser sur l'écran.

Pour afficher une page de texte, l'appareil comporte également au moins une mémoire de page qui est une mémoire vive et dans laquelle sont stockées temporairement c'est-à-dire avant la visualisation de la page, les codes des caractères alphanumériques à visualiser. Chaque caractère ainsi codé est formé de deux parties dont l'une est le code de caractère proprement dit (en code ASCII, par axemple) et dont l'autre est un code dit d'attributs relatif à la couleur, au fond et à d'autres fonctions devant être réalisées au moment de la visualisation de caractère. La Fig. 2 montre très schématiquement la configuration des caractères codés stockés dans une mémoire de page. On voit que chaque caractère codé 3 correspond à un caractère alphanumérique d'une rangée et qu'il est composé d'un code d'attibuts 4 et d'un code de caractère 5. Les caractères codés sont rangés dans la mémoire à des positions qui correspondent à celles des caractères affichés sur l'écran.

Par conséquent, chaque fois qu'une page composée de X rangées de Y caractères doit être visualisée, la mémoire de page contient X×Y caractères codés. L'adressage successif de ces caractères codés permet d'accéder au générateur de caractères provoquant ainsi la visualisation.

Cependant, pendant le déroulement de cette opération, il convient de tenir compte de la façon dont l'image est construite sur l'écran à savoir par balayage d'une trame composée de lignes entrelacées comme cela est bien connu dans la technique vidéo.

Les matrices étant composées de N lignes, chaque rangée de caractères est ainsi affichée par N addressages successifs de toutes les matrices de caractères d'une rangée, cet adressage étant réalisé au rythme du balayage ligne du tube à rayons cathodiques. Après affichage d'une rangée complète, la rangée suivante est visualisée ligne par ligne comme la précédente.

L'autre mode d'affichage dit graphique consiste à ne pas utiliser de générateurs de caractères, mais à employer une mémoire de page contenant l'information de page sous forme de points distincts 6 (Fig. 3) codés de façon binaire. Ce code est en fait un code de fonction relatif à la couleur ou à la nuance de gris du point à afficher. Il est clair qu'une telle méthode permet de dessiner n'importe quelle forme sur l'écran dans la limite de la résolution imposée par la densité des points sur l'écran. Danc ce cas également, les points sont emmagasinés de préférence à des positions de mémoire correspondant à leur position dans l'image affichée au cours de la visualisation. La mémoire de page est lue ligne par ligne au rythme du balayage ligne de l'écran.

Dans un exemple concret, chaque matrice de caractères emmagasinée dans le générateur de caractères et affichée sur l'écran comporte 8×10 points d'image (M=8, N=10) et chaque rangée comporte 40 caractères (Y=40). Par ailleurs, chaque caractère nécessite deux octets (caractère et attributs) pour son identification dans la mémoire de page. En outre, chaque page comporte 25 rangées de caractères alphanumériques (X=25). Dans ces conditions, en mode typographique, la mémoire de page doit avoir une capacite de

$$25 \times 40 \times 2 = 200$$

octets pour l'affichage sur l'ecran d'une page complète en mode typographique.

En mode graphique, on peut utiliser un codage à trois bits pour chaque point (ce qui permet de lui affecter huit nuances de gris ou huit couleurs d'un nombre de points égal à celui nécessaire pour écrire 40 matrices côte à côte. Dans ces conditions, chaque ligne nécessite

$$8 \times 3 \times 40 = 960 \text{ bits,}$$

ce qui revient à 120 octets par ligne. Pour un nombre égal de lignes d'image (25×10), la mémoire de page emmagasine alors

$$250 \times 120 = 30\ 000 \text{ octets,}$$

si toute la page comporte des éléments graphiques.

Toutefois, la Demanderesse a réussi à mettre au point un procédé dans lequel il est possible de mélanger dans une même page affichée, des éléments graphiques et des éléments typographiques ce qui permet de réduire notablement la taille maximale nécessaire de la mémoire de page.

Quoiqu'il en soit, pour pouvoir afficher un message dont la longueur dépasse le contenu d'une page visualisée complète, les procédés de visualisation décrits ci-dessus peuvent être assortis d'une possibilité de défilement de l'image par déplacement du texte ou des dessins graphiques ou autres sur l'écran ou de changement complet de l'image en modifiant la totalité du contenu de la mémoire affectée à la visualisation de la page courante. En d'autres termes, on modifie toutes les adresses de caractères et d'attributs rangées respectivement à toutes les positions de la mémoire de page pour assurer la visualisation d'une page dont par exemple une rangée de caractères a disparue en haut de l'écran, tandis qu'une rangée y a été ajoutée en bas de celui-ci par rapport à la page précédemment affichée.

L'invention a pour but de fournir un procédé et un dispositif du type indiqué ci-dessus qui permettent moyennant une capacité minimale de mémoire, l'affichage d'images animées soit sous la forme du défilement d'un texte, soit sous la forme d'images donnant comme dans la technique cinématographique l'illusion du mouvement sur l'écran.

L'invention a donc d'abord pour objet un procédé pour la visualisation de messages du type télétexte transmis par un signal du type télévision et composés de pages affichées sur l'écran d'un dispositif d'affichage à trame balayée sur lequel les images correspondant à ces pages sont tracées par un balayage ligne par ligne, les données représentatives des éléments de chaque page à afficher sur l'écran étant emmagasinées dans une mémoire de page sous la forme d'un code binaire pour en être extraites sous la commande d'un circuit à base de temps, lui-même commandé par les impulsions de synchronisation faisant partie dudit signal du type télévision, ledit procédé consistant à affecter la fonction de mémoire de page à au moins deux zones d'un ensemble mémoire et étant caractérisé en ce qu'il consiste en outre à conférer à chacune desdites zones une adresse de base et une indication de décalage provenant d'un registre d'état permettant de choisir la position de début d'image par rapport aux signaux de synchronisation de la base de temps, ladite adresse de base et ladite indication de décalage identifiant ladite zone de façon unique et en ce que pour extraire les données rangées aux positions desdites zones, le procédé consiste à envoyer à l'ensemble mémoire des addresses composées de l'adresse de base de la zone de mémoire concernée associée à la valeur de l'adresse d'une position de mémoire dont, à un instant considéré, les données doivent être extraites par ladite adresse composée pour la visualisation.

Il résulte de ces caractéristiques que par une simple modification de l'adresse de base, des données peuvent être sélectivement extraites des zones de mémoire dudit ensemble, celui-ci comportant à un instant donné une quantité de données qui est supérieure à celle nécessaire pour la visualisation d'une page sur l'écran.

Ainsi, l'invention permet d'utiliser un ensemble mémoire d'une conception standard dans lequel les zones de mémoire sont délimitées de façon variable en fonction des besoins, par les adresses de base, la dernière position d'une zone donnée pouvant être suivie immédiatement par une position qui à l'instant considéré est identifiée par l'adresse de base d'une autre zone de l'ensemble mémoire affectée par exemple à la fonction de mémoire de page.

Cette conception de l'ensemble mémoire permet ainsi d'obtenir une souplesse de traitement considérable, l'ensemble mémoire pouvant être adapté à chaque instant aux besoins de la visualisation.

Suivant une caractéristique importante de l'invention, le procédé étant destiné à la visualisation de messages dont certaines pages au moins contiennent au moins une partie composée d'éléments de message typographiques, qui peuvent être visualisés sélectivement à l'aide d'au moins deux générateurs de caractères dans lesquels sont emmagasinées des données de visualisation de caractères typographiques, caractérisé en ce que le procédé consiste à affecter la fonction de générateur de caractères à d'autres zones de mémoire dudit ensemble mémoire et en ce que les adresses extraites de l'une quelconque des autres zones affectées à une mémoire de page sont des adresses composées notamment d'une adresse de base et d'un code propre à l'élément typographique à visualiser.

Cette caractéristique implique que l'ensemble mémoire peut être divisé en des zones mémoires dont les fonctions sont différentes à savoir certaines zones sont affectées à la fonction de mémoire de page, d'autres à celle de générateur de caractères, la capacité de ces zones pouvant à tout instant être adaptée aux besoins de la visualisation, y compris en ce que concerne les zones utilisées pour les générateurs de caractères dont, le cas échéant, le contenu peut être modifié également en fonction des besoins.

L'invention permet ainsi de créer une animation au moins partielle des images visualisées. En effet, suivant une autre caractéristique, le procédé consiste à modifier sélectivement et périodiquement les adresses de base identifiant lesdites zones affectées à la fonction de mémoire de page pour extraire périodiquement des données de zones différentes dudit ensemble mémoire, ces zones contenant des données de visualisation au moins partiellement différentes.

Cette animation peut commodément revêtir l'aspect d'un défilement vertical de l'image si conformément à une autre caractéristique de l'invention, le procédé consiste en outre à ne modifier périodiquement l'adresse de base identifiant une zone donnée affectée à la fonction de mémoire de page que d'une valeur numérique (80 octets par exemple) correspondant à la différence des valeurs d'adresse de début et de fin d'une rangée d'éléments de message à visualiser.

L'invention a également pour objet un dispositif pour la mise en oeuvre du procédé de l'invention ainsi qu'un procédé et un réseau de transmission de messages comportant application du procédé tel que défini ci-dessus.

D'autres caractéristiques et avantages de l'invention apparaîtront au cours de la description qui va suivre, donnée uniquement à titre d'exemple et faite en se référant aux dessins annexés, sur lesquels:

—la Fig. 1 est une représentation schématique d'une rangée de caractères alphanumériques composés de matrices de visualisation stockées dans un générateur de caractères et destinées à la visualisation d'éléments typographiques d'un message composé de pages de texte;

—la Fig. 2 est une représentation schématique de l'emmagasinage dans une mémoire de page des caractères codés relatifs au contenu du générateur de caractères de la Fig. 1;

—la Fig 3 est une représentation schématique de l'emmagasinage dans une mémoire de page des données relatives à une visualisation en mode graphique d'éléments d'un message composé de pages de texte;

—la Fig. 4 est une représentation schématique d'un écran de télévision pour montrer comment est située dans une image vidéo transmise selon les standards classiques, la zone réellement visible par l'observateur;

—la Fig. 5 représente un exemple d'un signal relatif aux données pouvant être utilisées pour la transmission d'une ligne vers un poste récepteur d'un système de télétexte connu sous la dénomination "Antiope", (mode typographique);

—la Fig. 6 montre schématiquement le contenu d'un caractère codé écrit dans une mémoire de page pour le mode typographique;

—la Fig. 7 montre un schéma analogue pour l'écriture dans la mémoire de page des données de visualisation graphique;

—la Fig. 8 est une représentation symbolique de l'écriture en mémoire d'une page de données relatives respectivement aux modes typographique et graphique, conforme aux caractéristiques du mode de mise en oeuvre préféré de l'invention;

—la Fig. 9 est un exemple d'une image réellement visible sur l'écran lorsque le procédé suivant l'invention est appliqué;

—la Fig. 10 est un schéma général d'un poste récepteur destiné à la visualisation de pages de télétexte conformément au système de télétexte "Antiope" poste récepteur qui met en oeuvre le procédé suivant l'invention;

—la Fig. 11 est un schéma symbolique d'un réseau de transmission mettant en oeuvre une application du procédé suivant l'invention.

L'invention va être décrite en tant qu'application dans un système de télétexte appelé "Antiope" mais il est entendu qu'elle peut être appliquée dans tous les cas où il s'agit d'afficher sur un tube à rayons cathodiques ou autre, des messages composés de pages et contenant de l'information typographique et graphique.

Un exemple d'une telle application est un terminal d'un ordinateur ou autre système analogue de traitement de l'information.

Pour la clarté de l'exposé, il est utile de rappeler brièvement les caractéristiques essentielles du système de télétexte dénommé "Antiope". Toutefois pour plus de détails, il y a lieu de se reporter aux ouvrages suivants:

1) un article de la revue de Radio Diffusion-Télévision n° 40—1975 par Bernard Marti et Michel Mauduit;

2; un article "ANTIOPE LSI" de la revue IEEE Transactions on Consumer Electronics, volume CE-25, n° 3, Juillet 1979, pages 334—338, par P. Frandon et G. Chauvel, cet article décrivant l'architecture générale du poste récepteur; et

3) un cahier de spécifications du système de télétexte "Antiope" édité par le Centre Commun d'Etudes de Télévision et de Communications (CCETT).

Le système de télétexte Antiope comporte un terminal de visualisation qui peut recevoir ses informations d'entrée d'une ligne téléphonique ou bien d'un signal de télévision diffusé par un émetteur et comportant en plus de l'information analogique relative aux images vidéo construites de façon classiques, de l'information sous forme binaire placée en multiplex sur le signal vidéo émis dans les intervalles laissés libres par les standards classiques de télévision tels que SECAM, PAL, NTSC, etc.

La Fig. 4 des dessins annexés montre schématiquement la configuration d'une trame normalisée de télévision dans laquelle le rectangle intérieur ZV correspond à la zone réellement visible sur l'écran, l'espace marginal ZM correspondant notamment à 40 lignes en haut et 23 en bas de cette zone n'étant pas visible. Ainsi, dans un tel signal vidéo, chaque signal de trame situé entre deux impulsions de synchronisation de trame comporte une partie vidéo destinée à tracer une image vidéo par le signal vidéo analogique classique ainsi qu'une partie, d'une durée de vingt lignes, par exemple, destinée à la transmission du télétexte, par un signal se présentant sous forme binaire.

L'intervalle de temps nécessaire pour le balayage de ces lignes est donc rempli par un signal numérique dont la composition peut être celle de la Fig. 5 qui représente un exemple des données qui peuvent être transmises entre deux impulsions de synchronisation ligne.

L'originalité et les avantages considérables résultant du système Antiope par rapport aux autres systèmes de télétexte connus réside dans le fait que la transmission du message est totalement asynchrone et indépendante par rapport à la visualisation sur l'écran, le poste récepteur étant équipé de moyens lui permettant d'interpréter les données reçues, de les accumuler et de les visualiser sur l'écran d'une façon correcte, indépendamment du débit des données reçues.

Le signal ou paquet de données transmis entre deux impulsions de synchronisation ligne 7 comporte un préfixe 8 composé de huit octets décomposés en les éléments suivants:

—une salve de synchronisation 9 destinée à la synchronisation de l'oscillateur de l'appareil récepteur et à servir de référence à la reconstitution des octets suivants (3 octets);

—une identification de magazine 10 (3 octets) pour permettre la reconnaissance de l'appartenance du paquet de données à un magazine de pages donné;

—un groupe 11 de deux octets comportant un indice de nombre de paquets (1 octet) successifs émis pour le magazine concerné, ainsi qu'un indice de format qui contient le nombre total des octets dans le paquet considéré, ce nombre pouvant varier d'un signal à l'autre.

Le signal comporte également 32 octets de données dont des octets 12 de drapeau de page qui indiquent le numéro de la page de magazine dont font partie les données considérées. Ensuite, dans le cas de la Fig. 2, suit l'information 13 à visualiser réellement composée d'octets représentant dans le cas du mode typographique illustré et pour chaque caractère à afficher un code de caractère normalise (le code ASCII par exemple), ainsi qu'un code dit d'attributs qui désigne certaines caractéristiques du caractère à afficher (couleur, par exemple).

Ainsi, comme représenté sur la Fig. 6, on voit que le caractère "A" à afficher peut être transmis sous la forme de deux octets 14a et 14b comportant de droite à gauche le code ASCII 15 (100—0001 et l'occurence) sur sept bits, ainsi qu'un code d'attributs 17 qui peut être la couleur du caractère ou sa taille par exemple. Les données de caractères peuvent alterner avec des données relatives au fond de l'image ou à d'autres éléments du message, tels que le code espace, un code de ligne dans le cas ou des lignes de l'image doivent être sautées, etc.

Bien entendu, les codes ainsi contenus dans chaque intervalle entre deux impulsions de synchronisation sont, dans le cas du mode typographique, des caractères codés devant être écrits dans une mémoire de page qui coopère avec un ou plusieurs générateurs de caractères utilisés pour la visualisation sur l'écran.

Il en va différemment dans le cas où le message contient des données relatives au modes graphique. La Fig. 7 représente une partie des données pouvant être transmises et interprétées par le poste récepteur. Chaque point d'image Px, Px+1, Px+2, Px+3 ... est transmis sous la forme d'un code à 3 bits désignant en fait la valeur d'une échelle des couleurs primaires ou de nuances de gris et à la réception ces données sont stockées dans la mémoire de page pour être visualisées sans l'aide des générateurs de caractères.

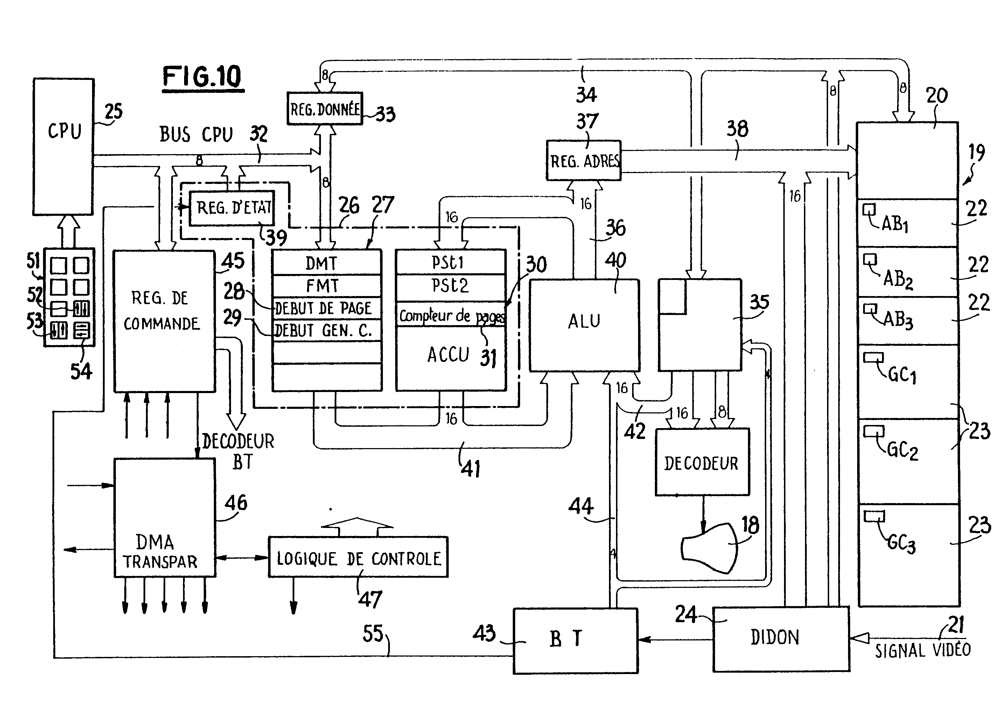

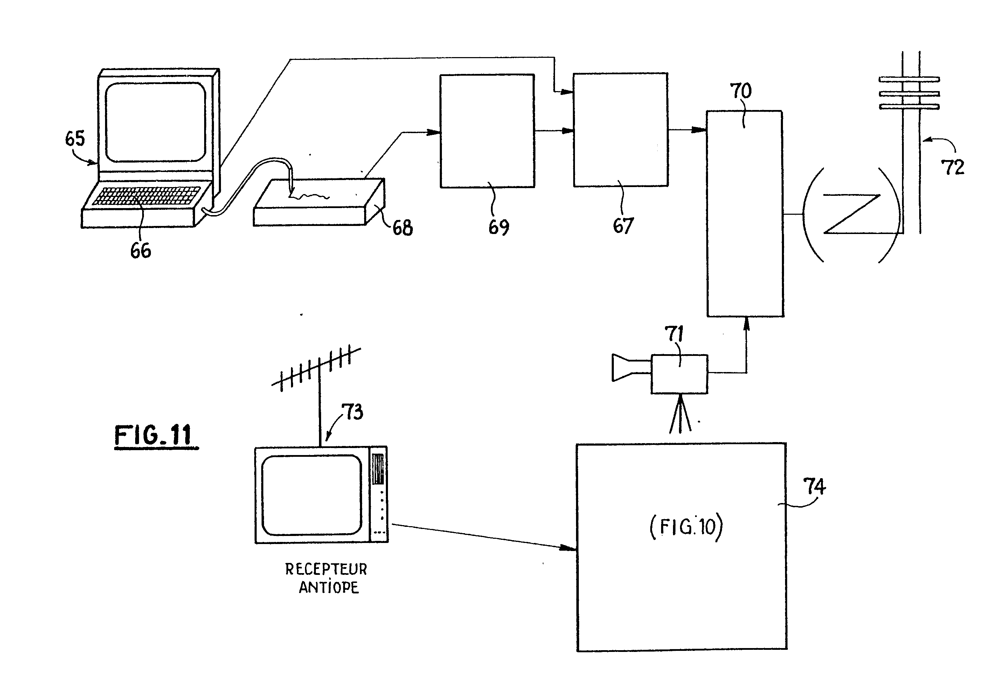

Le schéma de principe représenté sur la Fig. 10 concerne la partie du poste récepteur du système Antiope capable de séparer l'information binaire relative au télétexte du signal vidéo émis et de transformer cette information en des images affichées sur un écran d'un tube cathodique, ici schématisé en 18.

Suivant l'invention, le poste ou terminal comporte un ensemble mémoire ou mémoire composite 19 dont les sections sont affectées au stockage de donnés de natures diverses. Tout d'abord, cet ensemble mémoire comporte une zone qui constitue une mémoire tampon 20 capable de stocker provisoirement des données d'entrée séparées du signal vidéo appliqué au terminal (flèche 21).

En outre, l'ensemble mémoire 19 comporte plusieurs zones 22 affectées à l'emmagasinage de pages d'information devant être affichées, ces zones étant appelées mémoires de page et d'autres zones 23 affectées au stockage de l'information de caractères appelées générateurs de caractères. Ces dernières zones peuvent être du type mémoire morte tandis que les zones 22 sont des mémoires vives comme l'est naturellement la mémoire tampon 20. On verra par la suite comment ces diverses zones de l'ensemble mémoire sont utilisées au cours de la visualisation sur l'écran.

Le signal vidéo multipléxe 21 est appliqué à un circuit séparateur 24 appelé "Didon" dans le deuxième article "ANTIOPE LSI" (par M. Frandon et G Chauvel) cité ci-dessus pour séparer l'information de télétexte, du signal vidéo destiné à la diffusion d'images vidéo classiques.

Dans le dispositif de la Fig. 10, la gestion de l'ensemble des données provenant de la mémoire tampon 20 est assurée par une unité de traitement central 25 (CPU) et par ses organes périphériques associés. Cette unité 25 est chargée notamment de traiter la partie des paquets de données contenant les informations d'affichage proprement dites telles que les informations de mode typographique ou graphique.

Le circuit de commande de la mémoire tampon 20 est représente essentiellement dans le cadre en pointillés 26 de la Fig. 10 et il assure la gestion du contenu de la mémoire tampon 20. Des registres DMT (début de Mémoire Tampon) et FMT (Fin de Mémoire Tampon) font partie d'une pile de registres 27 contenant également d'autres registres pour stocker des adresses relatives à d'autres zones de l'ensemble mémoire 19, comme il sera expliqué plus en détail par la suite. Par exemple, il est prévu un registre 28 d'adresse de début de page et un ou plusieurs registres 29 d'adresse de début de générateur de caractères. Par ailleurs, il est prévu un accumulateur 30 qui comporte notamment des compteurs ou pointeurs $PST_1$ et $PST_2$ de la mémoire tampon 20 ainsi que d'autres compteurs tel qu'un compteur 31 des pages du magazine transmis.

La pile de registres 27 est reliée au réseau de bus de données 32 connecté à un registre de données 33 lui-même relié par le bus 34 à la mémoire 19, au séparateur Didon 24 et à un dispositif 35 de traitement des données typographiques et graphiques devant être affichées sur l'écran du tube 18. Ce dispositif de traitement 35 comporte également des moyens pour assurer l'affichage d'éléments de message répétitifs sur l'écran du tube 18 par l'intermédiaire d'un décodeur.

L'accumulateur 30 est relié à un bus d'adresses 36 communiquant avec un registre d'adresses 37 qui est connecté à son tour à l'entrée d'adresses de l'ensemble mémoire 19 par un bus 38.

Un registre d'état 39 est relié au bus 32 communiquant avec l'unité de traitement central 25.

Le dispositif d'affichage de télétexte comporte également une unité arithmétique et logique 40 chargée d'élaborer les adresses devant être envoyées à l'ensemble mémoire 19 d'une part à partir de la pile de registres 27 et de l'accumulateur 30 par un bus 41 et d'autre part à partir du dispositif 35 de traitment par un bus 42 sur lequel circulent les adresses en code ASCII des caractères stockés dans les générateurs de caractères 23 de l'ensemble mémoire 19.

Un circuit à base de temps 43 relié au dispositif séparateur Didon 24 et aux divers autres organes du dispositif d'affichage par des bus 44 assure la synchronisation de toutes les opérations.

Un registre de commande 45 assure le gestion des données circulant sur les bus pour les introduire dans les registres appropriées, tandis qu'un dispositif 46 d'accès direct à la mémoire de type transparent assure la gestion de l'accès à la mémoire 19 par les divers organes du dispositif d'affichage sans qu'il y ait interaction possible entre ces organes. On trouve une description détaillée d'un tel dispositif d'accès direct à la mémoire dans la demande de brevet FR—A— 2 406 250 ayant pour titre "Dispositif d'accès direct à une mémoire associée à un microprocesseur".

Le dispositif 46 d'accès direct à la mémoire est associée à une logique contrôle 47.

Après avoir examiné l'architecture générale du poste récepteur ou terminal, on va maintenant décrire plus en détail le procédé suivant l'invention et sa mise en oeuvre dans ce poste récepteur.

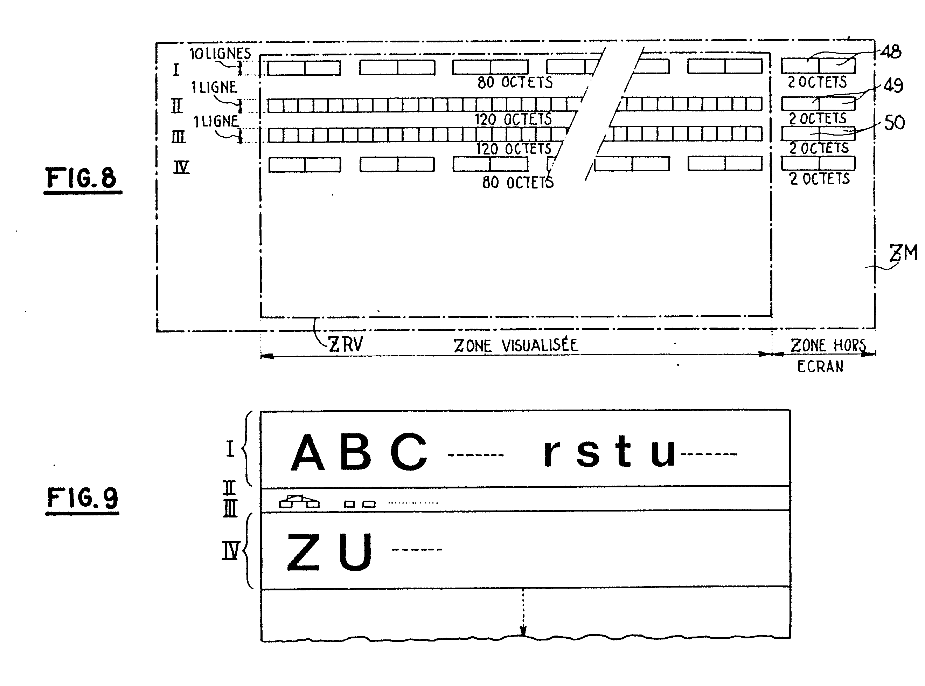

Toutefois, pour faciliter la compréhension de l'exposé, il est utile de se reporter d'abord aux Fig. 8 et 9 qui illustrent l'affichage de messages contenant dans chaque page un mélange d'éléments typographiques et d'éléments graphiques.

La Fig. 8 montre schématiquement le contenu d'une mémoire de page recevant les données d'une page par transfert de ces données à partir de la mémoire tampon 20 sous la commande du circuit de commande 26.

Dans l'exemple représenté, on suppose que la page à afficher comporte une partie typographique ainsi qu'une partie graphique réparties chacune sur un certain nombre de lignes de l'image. Ainsi, la mémoire de page comporte une première rangée I d'adresses typographiques constituées chacune par un octet d'attributs et un octet de code ASCII, relatifs à un caractère à afficher. Dans l'exemple décrit, cette rangée d'adresses comporte donc 80 octets et sur l'écran, la rangée de caractères affichés occupe dix lignes d'image. Les octets ainsi stockés dans la mémoire sont utilisés pour la visualisation et commandent un générateur de caractères de la façon déjà décrite, et ils concernent donc uniquement la zone réellement visible sur l'écran indiqué en ZRV.

Sur la Fig. 8, les octets 48 de la zone marginale non visualisée ZM sont destinés à identifier la nature de la rangée suivante des adresses de la mémoire de page, cette rangée étant dans cet exemple une rangée graphique.

Cette rangée II est composée, pour ce que concerne la zone réellement visible, de 120 octets contenant 3 bits d'information pour 320 points d'image à visualiser et elle se termine par deux octets d'identification 49 relatifs à l'affichage de la rangée III suivante qui est ici encore de nature graphique, dont le contenu est également de 120 octets et qui se termine par deux octets d'identification 50. Ceux-ci, dans l'exemple, déterminent la rangée IV suivante de nature typographique.

Ainsi, on peut stocker une page de télétexte dans une mémoire de page en mélangeant des éléments typographiques et graphiques jusqu'à concurrence de la capacité totale de la mémoire de page.

La Fig. 9 représente l'image que l'on peut voir réellement sur l'écran 18 lorsque la mémoire de page est chargée avec l'information de la Fig. 8.

En se référant de nouveau à la Fig. 10, on voit que l'ensemble mémoire 19 comporte trois zones 22 de mémoire de page et trois zones 23 de générateurs de caractères. Cette configuration peut être fixe ou au contraire varier suivant les besoins de la visualisation.

En considérant plus particulièrement les zones 22, on peut leur affecter chacune une adresse de base $AB_1$, $AB_2$ et $AB_3$ par exemple identifiant la position en haut à gauche dans la zone. On conçoit que si on adresse cette mémoire avec la valeur de l'adresse $AB_1$ (0A00, par exemple en code hexadécimal), on en extrait les données stockées à cette position particulière et l'on peut successivement adresser toutes les positions de cette zone en incrémentant l'adresse de base de la valeur de la position dans la zone. En supposant pour le besoin de l'exemple que cette zone de mémoire de page comporte 2000 octets, l'adresse de base $AB_2$ pourra avoir la valeur de 1100 et toutes les positions de cette seconde zone pourront être adressées en majorant cette valeur d'adresse de la valeur de la position concernée.

En d'autres termes, on peut explorer la première zone à partir de l'adresse de base $AB_1$ et ensuite la seconde zone à partir de l'adresse de base $AB_2$ en modifiant la valeur d'un compteur qui sur la Fig. 10 est le registre 28 de la pile de registres 27. Il en est de même pour l'adresse de base $AB_3$. Il est possible ainsi de choisir une adresse de base qui est comprise entre les adresses de base $AB_1$ et $AB_3$, ce qui permet d'afficher une page qui recouvre partiellement deux pages définies par l'une quelconque des adresses de base $AB_1$, $AB_2$ et $AB_3$.

En ce qui concerne les générateurs de caractères 23, le même principe peut être utilisé en affectant à chaque zone une adresse de base $GC_1$, $GC_2$, $GC_3$ ... identifiant des positions de début des zones mémoires correspondantes.

Dès lors, on peut constater que:

—la taille de chaque zone de mémoire peut varier au cours du fonctionnement suivant leur chargement, les adresses de base pouvant être modifiées très commodément à l'aide des registres 28 et 29 de début de mémoire de page et de début de générateur de caractères (il est à noter que d'une façon générale, les zones de générateurs de caractères peuvent rester figées une fois pour toutes);

—on peut "commuter" très facilement d'une mémoire de page à une autre par simple changement d'adresse de base;

—on peut obtenir une animation au sens cinématographique du terme en changeant légèrement le contenu des mémoires de page en les adressant successivement à partir de leurs adresses de base;

—en chargeant une partie continue de message dans les zones 22 successives de l'ensemble mémoire 19, cette partie dépassant la capacité d'au moins une zone, on peut obtenir un défilement d'un texte en faisant disparaître une rangée en haut de l'écran et en y ajoutant une autre en bas de l'écran.

Les variations de l'adresse de base des zones mémoires peuvent être obtenues de différentes façons. Tout d'abord, elles peuvent être contenues dans le signal d'entrée 21 et être interprétée après séparation dans le dispositif séparateur Didon 24 par l'unité de traitement centrale 25 qui commande le changement du registre 28 de début de mémoire de page. Ce cas s'applique notamment lorsque l'image à afficher est animée au sens cinématographique du terme, mais il est également possible de commander le défilement à l'émission. Toutefois, dans le cas du défilement d'un texte rangée par rangée ou ligne par ligne, il est préférable der prévoir une commande locale engendrée à l'aide d'un clavier 51 disponible pour l'utilisateur et connecté à l'unité de traitement centrale 25. Ce clavier comporte notamment:

—une touche 52 de défilement verticale rangée par rangée provoquant un mouvement vertical par rangées en mode typographique lorsqu'elle est sélectionnée par l'utilisateur;

—une touche 53 de défilement vertical ligne par ligne de la trame de l'image en mode typographique ou graphique;

—une touche 54 dont l'enfoncement a pour effet un mouvement horizontal de l'image pour provoquer un défilement à partir de l'une ou l'autre des marges verticales de l'image.

Bien entendu, chaque touche est divisée en deux parties affectées chacune à un sens de défilement comme l'indiquent les flèches sur la Fig. 10.

En examinant d'abord le fonctionnement associé à la touche 52, on peut concevoir que les zones mémoires 22 contiennent un passage du message qui occupe plusieurs pages à afficher (ici trois pages, par exemple). En supposant que le poste récepteur fonctionne sur la base expliquée plus haut à propos des Fig. 1 et 2 (mode typographique exclusivement), le défilement peut être obtenu en majorant périodiquement l'adresse de base du nombre d'octets nécessaire pour l'affichage d'une rangée (80 octets), cette majoration étant élaborée dans l'unité centrale de traitement 25 par l'intermédiaire du clavier 51. Chaque majoration a ainsi pour effet, d'enlever une rangée en haut de l'écran et d'en rajouter une en bas, de sorte qu'en quelque sorte la mémoire de page en tant que zone mémoire se déplace dans l'ensemble mémoire 19. Bien entendu, en procédant à l'envers c'est-à-dire en retranchant le nombre d'octets de l'adresse de base, on obtient un défilement vertical en sens inverse.

Les valeurs modifiées successives de l'adresse de base sont chargées dans le registre de base 28 à un rythme qui peut être déterminé par l'unité 25. Ce rythme peut éventuellement être rendu variable à partir du clavier 51. On no tera que ce défilement n'implique pas la réinscription de la page qui défile dans l'ensemble mémoire 19 jusqu'à concurrence de la partie de message chargé dans cet ensemble.

Si le message est uniquement de nature graphique, on peut obtenir un défilement de l'image ligne par ligne en décalant chaque fois l'adresse de base chargée dans le registre 28 d'une valeur de 120 octets (voir l'exemple de la Fig. 3). En mode mélangé (Fig. 8 et 9), on peut faire en sorte que le décalage tienne compte de la nature de la rangée qui doit être rajoutée ou ôtée de l'image.

Toutefois, on peut obtenir un défilement plus régulier et agréable à l'oeil en décalant temporellement le chargement de l'adresse de base de l'intervalle nécessaire pour le traçage d'une ou de plusieurs lignes sur l'écran.

Ainsi, un conducteur 55 applique les impulsions de synchronisation trame ou des impulsions correspondant au début de la zone visualisable ZV, ZRV (Flg. 4 et 8) au registre d'état 39 à partir du circuit à base de temps 43 de telle sorte que l'unité centrale 25 décale le chargement de l'adresse de base dans le registre 28. Si de décalage est de la durée d'une ligne, l'image sera décalée d'une ligne, si cette durée est de deux lignes, le décalage sera majoré d'autant ainsi de suite. Bien entendu, une commande spéciale accessible pour l'opérateur peut être prévue pour permettre la commande aussi bein du rythme que de l'amplitude du décalage.

Bien entendu, le processus que l'on vient de décrire peut être appliqué, que le mode d'affichage soit graphique ou typographique.

Le défilement dans le sens horizontal peut être obtenu par la touche 54. Dans ce cas, l'adresse de base de la page en cours de visualisation est décalée d'un nombre d'octets comprise entre 0 et 80 si la rangée est typographique ou entre 0 et 120 si elle est en mode graphique.

La Fig. 11 illustre le procédé de transmission de données dans lequel le procédé décrit ci-dessus est appliqué. A l'émission, il est prévu un terminal de composition 65 qui envoie des données de composition introduites à l'aide du clavier 66 à un générateur 67 de language Antiope (voir les ouvrages précités).

Le terminal est associé à une table de composition graphique 68 qui envoie des données à un générateur 69 de language graphique. Ces données sont mises sous forme de paquets d'informations (Fig. 5) et mélangées dans un multiplexeur 70 à un signal vidéo capté par une caméra 71. Le multiplexeur 70 est relié à un émetteur 72 pour que le signal multiplexé soit diffusé sur un canal de télévision.

A la réception, un poste récepteur vidéo 73 est muni d'un appareil complémenataire 74 qui comporte un circuit tel que représenté sur la Fig. 10.

Le signal issu du générateur 67 comporte notamment l'information concernant la sélection des zones de mémoire et le cas échéant des données concernant l'animation de l'image sur l'écran comme cela a été décrit ci-dessus.

## Revendications

1. Procédé pour la visualisation de messages du type télétexte transmis par un signal du type télévision (21) et composés de pages affichées sur l'écran d'un dispositif d'affichage à trame balayée (18) sur lequel les images correspondant à ces pages sont tracées par un balayage ligne par ligne, les données représentatives des éléments de chaque page à afficher sur l'écran étant emmagasinées dans une mémoire de page (22) sous la forme d'un code binaire pour en être extraites sous la commande d'un circuit à base de temps (43), lui-même commandé par les impulsions de synchronisation faisant partie dudit signal du type télévision (21), ledit procédé consistant à affecter la fonction de mémoire de page à au moins deux zones (22) d'un ensemble mémoir (19) et étant caractérisé en ce qu'il consiste en outre à conférer à chacune desdites zones une adresse de base ($AB_1$, $AB_2$, $AB_3$) et une indication de décalage provenant d'un registre d'état (39) permettant de choisir la position de début d'image par rapport aux signaux de synchronisation de la base de temps, ladite adresse de base et ladite indication de décalage identifiant ladite zone (22) de façon unique et en ce que pour extraire les données rangées aux positions desdites zones (22), le procédé consiste à envoyer à l'ensemble mémoire (19) des adresses composées de l'adresse de base ($AB_1$, $AB_2$, $AB_3$) de la zone de mémoire (22) concernée associée à la valeur de l'adresse d'une position de mémoire dont, à un instant considéré, les données doivent être extraites par ladite adresse composée pour la visualisation (Fig. 10).

2. Procédé suivant la revendication 1, destiné à la visualisation de messages dont certaines pages au moins contiennent au mois une partie composée d'éléments de message typographiques, qui peuvent être visualisés sélectivement à l'aide d'au moins deux générateur de caractères (23) dans lesquels sont emmagasinées des données de visualisation de caractères typographiques, caractérisé en ce que le procédé consiste à affecter la fonction de générateur de caractère à d'autres zones (23) de mémoire dudit ensemble mémoire (19) et en ce que les adresses extraites de l'une quelconque des autres zones (23) affectées à une mémoire de page sont des adresses composées notamment d'une adresse de base ($GC_1$, $GC_2$, $GC_3$) et d'un code propre à l'élément typographique à visualiser.

3. Procédé suivant l'une quelconque des revendications 1 et 2, caractérisé en ce qu'il consiste pour créer des images au moins partiellement animées, à modifier sélectivement et périodiquement les adresses de base ($AB_1$, $AB_2$, $AB_3$) identifiant lesdites zones (22) affectées à la fonction de mémoire de page pour extraire périodiquement des données de zones différentes dudit ensemble mémoire (19), ces zones (22) contenant des données de visualisation au moins partiellement différentes.

4. Procédé suivant la revendication 3, caractérisé en ce que, pour que l'animation des images soit un défilement vertical de l'image, le procédé consiste à ne modifier périodiquement l'adresse de base ($AB_1$, $AB_2$, $AB_3$) identifiant une zone (22) donnée affectée à la fonction de mémoire de page, que d'une valeur numérique, 80 octets par exemple, correspondant à la différence des valeurs d'adresse de début et de fin d'une rangée d'éléments de message à visualiser sur le dispositif d'affichage (18).

5. Procédé suivant l'une quelconque des revendications 3 et 4, caractérisé en ce que la fréquence de changement des adresses de base ($AB_1$, $AB_2$, $AB_3$) est un multiple de 1 à n de la fréquence de trame du balayage dudit dispositif d'affichage (18).

6. Procédé suivant l'une quelconque des revendications 3 à 5, caractérisé en ce que la modification de l'adresse de base ($AB_1$, $AB_2$, $AB_3$) est exécutée après une répétition d'une nombre prédéterminé de fois d'une même adresse de base pour provoquer la visualisation répétée d'une même page avant l'affichage d'une page modifiée.

7. Procédé suivant l'une quelconque des revendications 1 à 6, caractérisé en ce que la modification de l'adresse de base est réglable localement par exemple par des touches (52, 53, 54) de clavier (51).

8. Procédé suivant la revendication 1, caractérisé en ce qu'il consiste en outre à décaler temporellement l'extraction de l'adresse de base ($AB_1$, $AB_2$, $AB_3$) par rapport à la synchronisation horizontale et/ou verticale du balayage du dispositif d'affichage (18).

9. Dispositif pour la mise en oeuvre du procédé tel que défini dans l'une quelconque des revendications 1 à 8 comprenant un dispositif d'affichage à trame balayèe (18), au moins une mémoire de page (22), au moins un générateur de caractères, des moyens pour emmagasiner temporairement des données relatives à une page dans la mémoire de page (22) et pour extraire ces données de cette mémoire (22) en vue de la visualisation, le cas échéant par l'intermédiaire du générateur de caractères (23), lesdites données étant interprétées dans des moyens de traitement (35) qui par l'intermédiaire d'un décodeur sont reliés au dispositif d'affichage à trame balayée (18), ledit dispositif comportant en outre un circuit à base de temps (43) chargé de coordonner et de synchroniser le transport des données en fonction du balayage du dispositif d'affichage (18), ce dispositif étant caractérisé en ce qu'il comprend un ensemble mémoire composite (19) dans lequel sont définies des zones de mémoire (20, 22, 23), certaines au moins de ces zones (22) étant affectées à la fonction de mémoire de page, et des moyens (25, 51) pour engendrer des adresses de base ($AB_1$, $AB_2$, $AB_3$) et une indication de décalage provenant d'un registre d'état (39) permettant de choisir la position de début d'image par rapport aux signaux de synchronisation de la base de temps (43) destinées à définir le début d'une zone mémoire à un instant considéré du fonctionnement du dispositif (Fig. 10).

10. Dispositif suivant la revendication 9, caractérisé en ce que certaines desdites zones (23) sont affectées à la fonction de générateurs de caractères.

11. Dispositif suivant l'une quelconque des revendications 9 et 10, caractérisé en ce qu'il comporte des moyens (25, 51) pour modifier l'adresse de base ($AB_1$, $AB_2$, $AB_3$) d'au moins une zone (22) définie dans l'ensemble mémoire (19) pour assurer le défilement de l'image sur le dispositif d'affichage (18).

12. Dispositif suivant la revendication 11, caractérisé en ce que lesdits moyens pour modifier l'adresse de base comportent un clavier (51) muni d'au moins une touche (52, 53) pour le défilement rangée par rangée et/ou ligne par ligne de l'image sur le dispositif d'affichage (18).

13. Dispositif suivant l'une quelconque des revendications 11 et 12, caractérisé en ce que lesdits moyens pour modifier l'adresse de base comportent un clavier (51) muni d'au moins une touche (53, 54) pour décaler temporellement le traitement de l'adresse de base par rapport aux informations de synchronisation de l'image sur le dispositif d'affichage (18).

14. Procédé de transmission de messages destinés à être visualisés sur au moins un dispositif d'affichage à trame balayée (18) et comportant application du procédé tel que défini dans les revendications 2, 4, 5, 6, 7 et 8, le procédé consiste à l'émission, à adjoindre audit signal du type télévision (21) des valeurs en code binaire représentant des adresses de base $(AB_1, AB_2, AB_3; GC_1, GC_2, GC_3)$ pour la sélection de zones mémoires (22; 23) utilisées à la réception dans un ensemble mémoire composite (19) (Fig. 10).

15. Procédé de transmission suivant la revendication 14, caractérisé en ce qu'il consiste en outre à adjoindre audit signal du type télévision (21) des valeurs en code binaire pour modifier les adresses de base $(AB_1, AB_2, AB_3; GC_1, GC_2, GC_3)$ transmises à des fins d'animation de l'image reproduite côté réception.

16. Réseau de transmission pour la mise en oeuvre du procédé tel que défini dans l'une quelconque des revendications 14 et 15, comportant des moyens de composition (65, 66, 68) pour engendrer des paquets de données représentant des éléments d'un message composés de pages à visualiser sur le dispositif d'affichage (18) d'au moins un poste récepteur (73), un canal de transmission et un poste récepteur (73) équipé pour recevoir lesdits paquets de données et les interpréter pour la visualisation, lesdits moyens de composition (65, 66, 68) comportent des moyens pour engendrer des adresses de base $(AB_1, AB_2, AB_3; GC_1, GC_2, GC_3)$ de selection de zones mémoires (22; 23) ainsi que, le cas échéant, des moyens pour modifier ces adresses de base en fonction d'une animation de l'image à afficher côté réception (Figs. 10, 11).

**Patentansprüche**

1. Verfahren zur Darstellung von Teletext-Nachrichten, die mittels eines Fernsehsignals (21) übertragen werden und aus Seiten zusammengesetzt sind, die auf dem Schirm einer nach dem Rasterverfahren arbeitenden Anzeigevorrichtung (18) dargestellt werden, auf dem die diesen Seiten entsprechenden Bilder durch zeilenweise Ablenkung erzeugt werden, wobei die Elemente jeder auf dem Schirm anzuzeigenden Seite repräsentierenden Daten in einem Seitenspeicher (22) in Form eines Binärcodes gespeichert sind, damit sie daraus unter der Steuerung einer Zeitbasischaltung (43) entnommen werden können, die ihrerseits von den einen Teil des Fernsehsignals (21) bildenden Synchronisierungsimpulsen gesteuert ist, wobei das Verfahren darin besteht, daß die Funktion des Seitenspeichers wenigstens zwei Zonen (22) einer Speichergruppe (19) zugewiesen wird, und dadurch gekennzeichnet ist, daß es unter anderem darin besteht, daß jeder der Zonen eine Basisadresse $(AB_1, AB_2, AB_3)$ sowie eine aus einem Zustandsregister (39) kommende Versetzungsanzeige zugewiesen wird, die es ermöglicht, die lage eines Bildanfangs bezüglich der Synchronisierungssignale der Zeitbasis auszuwählen, wobei die Basisadresse und die Versetzungsanzeige die Zone (22) in eindeutiger Weise identifizieren, und daß zum Entnehmen der in den Positionen der Zonen (22) angeordneten Daten das Verfahren darin besteht, an die Speichergruppe (19) Adressen zu senden, die aus der Basisadresse $(AB_1, AB_2, AB_3)$ der betroffenen Speicherzone (22) verbunden mit dem Wert der Adresse einer Speicherposition zusammengesetzt sind, deren Daten an einem betrachteten Zeitpunkt durch die zusammengesetzte Adresse für die Darstellung (Figur 10) entnommen werden müssen.

2. Verfahren nach Anspruch 1 zum Darstellen von Nachrichten, von denen zumindest gewisse Seiten wenigstens einen aus typographischen Nachrichtelementen zusammengesetzten Abschnitt enthalten, die in selektiver Weise mit Hilfe von wenigstens zwei Zeichengeneratoren (23) weidergegeben werden können, in denen Daten zur Darstellung typographischer Zeichen gespeichert sind, dadurch gekennzeichnet, daß das Verfahren darin besteht, daß die Zeichengeneratorfunktion anderen Speicherzonen (23) der Speichergruppe (19) zugewiesen wird und daß die irgendeiner der anderen Zonen (23) entnommenen Adressen, die einem Seitenspeicher zugeordnet sind, Adressen sind, die insbesondere aus einer Basisadresse $(GC_1, (GC_2, GC_3)$ und einem zu einem darzustellenden typographischen Element gehörigen Code zusammengesetzt sind.

3. Verfahren nach einem der Ansprüche 1 und 2, dadurch gekennzeichnet, daß es zur Erzeugung von wenigstens teilweise bewegten Bildern darin besteht, die Basisadressen $(AB_1, AB_2, AB_3)$ selektiv und periodisch zu modifizieren, die die der Funktion des Seitenspeichers zugeordneten Zonen (22) identifizieren, damit Daten unterschiedlicher Zonen der Speichergruppe (19) periodisch entnommen werden, wobei die Zonen (22) Darstellungsdaten enthalten, die zumindest teilweise unterschiedlich sind.

4. Verfahren nach Anspruch 3, dadurch gekennzeichnet, daß zum Bewegen der Bilder, etwa dem vertikalen Vorbeibewegen des Bildes, das Verfahren darin besteht, in periodischer Weise die Basisadresse $(AB_1, AB_2, AB_3)$, die eine der Funktion des Seitenspeichers zugewiesene Datenzone (22) identifiziert, nur um einen numerischen Wert, beispielsweise 80 Oktette, zu ändern, der der Differenz der Werte der Angangsadresse und der Endadresse eine Reihe von auf der Anzeigevorrichtung (18) darzustellenden Nachrichtenelementen entspricht.

5. Vorrichtung nach einem der Ansprüche 3 und 4, dadurch gekennzeichnet, daß die Änderungsfrequenz der Basisadressen ($AB_1$, $AB_2$, $AB_3$) ein Vielfaches von eins bis n der Zeilenfrequenz der Anzeigevorrichtung (18) ist.

6. Verfahren nach einem der Ansprüche 3 bis 5, dadurch gekennzeichnet, daß die Modifikation der Basisadresse ($AB_1$, $AB_2$, $AB_3$) durchgeführt wird, nachdem eine gleiche Basisadresse in einer vorbestimmten Anzahl wiederholt worden ist, damit die Darstellung einer gleichen Seite vor der Wiedergabe einer modifizierten Seite hervorgerufen wird.

7. Verfahren nach einem der Ansprüche 1 bis 6, dadurch gekennzeichnet, daß die Modifikation der Basisadresse an Ort und Stelle beispielsweise durch Tasten (52, 53, 54) einer Tastatur (51) regelbar ist.

8. Verfahren nach Anspruch 1, dadurch gekennzeichnet, daß es unter anderem darin besteht, die Entnahme der Basisadresse ($AB_1$, $AB_2$, $AB_3$) zeitlich bezüglich der Horizontalsynchronisation und/ oder der Vertikalsynchronisation der Ablenkung der Anzeigevorrichtung (18) versetz wird.

9. Vorrichtung zur Durchführung des Verfahrens nach einem der Ansprüche 1 bis 8, mit einer nach dem Rasterverfahren arbeitenden Anzeigevorrichtung (18) wenigstens einem Seitenspeicher (22), wenigstens einem Zeichengenerator, Mittel zum Zwischenspeichern von sich auf eine Seite beziehenden Daten in dem Seitenspeicher (22) und, je nach Fall, zum Entnehmen dieser Daten aus diesem Speicher (22) zum Zwecke der Wiedergabe mittels des Zeichengenerators (23), wobei die Daten in Verarbeitungsmitteln (35) interpretiert werden, die über einen Decodierer an die Anzeigevorrichtung (18) angeschlossen sind, wobei die Vorrichtung ferner eine Zeitbasisschaltung (43) enthält, deren Aufgabe es ist, den Datentransport in Abhängigkeit von der Ablenkung der Anzeigevorrichtung (18) zu koordinieren und zu synchronisieren, wobei die Vorrichtung dadurch gekennzeichnet ist, daß sie eine zusammengesetzte Speichergruppe (19) enthält, in der Speicherzonen (20, 22, 23) definiert sind, wobei wenigstens einigen dieser Zonen (22) die Funktion des Seitenspeichers zugewiesen ist, und Mittel (25, 51) zur Erzeugung von Basisadressen ($AB_1$, $AB_2$, $AB_3$) sowie einer aus einem Zustandsregister (39) kommenden Versetzungsanzeige enthält, die es ermöglicht, die Position des Bildanfangs in bezug auf Synchronisierungssignale der Zeitbasis (43) zu wählen, die dazu bestimmt sind, den Beginn einer Speicherzone im betrachteten Betriebszeitpunkt der Vorrichtung (Figur 10) festzulegen.

10. Vorrichtung nach Anspruch 9, dadurch gekennzeichnet, daß gewissen Zonen (23) die Funktion der Zeichengeneratoren zugewiesen ist.

11. Vorrichtung nach einem der Ansprüche 9 und 10, dadurch gekennzeichnet, daß sie Mittel (25, 51) zum Modifizieren der Basisadresse ($AB_1$, $AB_2$, $AB_3$) wenigstens einer definierten Zone (22) in der Speichergruppe (19) enthält, damit das Vorbeigewegen des Bildes auf der Anzeigevorrichtung (18) gewährleistet wird.

12. Vorrichtung nach Anspruch 11, dadurch gekennzeichnet, daß die Mittel zum Modifizieren der Basisadresse eine Tastatur (51) mit wenigstens einer Taste (52, 53) für den Bereichs- und/oder zeilenweisen Ablauf des Bildes auf der Anzeigevorrichtung (18) enthalten.

13. Vorrichtung nach einem der Ansprüche 11 und 12, dadurch gekennzeichnet, daß die Mittel zum Modifizieren der Basisadresse eine Tastatur und wenigstens eine Taste (53, 54) zum kurzzeitigen Verschieben der Verarbeitung des Basisadresse bezüglich der Synchronisierungsinformationen des Bildes auf der Anzeigevorrichtung (18) enthalten.

14. Verfahren zum Übertragen von zur Wiedergabe auf wenigstens einer nach dem Rasterverfahren arbeitenden Anzeigevorrichtung (18), bei welchem das in den Ansprüchen 2, 4, 5, 6, 7 und 8 definierte Verfahren Anwendung findet, wobei das Verfahren darin besteht, daß bei der Aussendung an das Fernsehsignal (21) binär codierte, Basisadressen ($AB_1$, $Ab_2$, $AB_3$; $GC_1$, $GC_2$, $GC_3$) repräsentierende Werte zur Auswahl von Speicherzonen (22; 23) angefügt werden, die beim Empfang in der zusammengesetzten Speichergruppe (19) (Figur 10) angewendet werden.

15. Verfahren zum Übertragen nach Anspruch 14, dadurch gekennzeichnet, daß es außerdem darin besteht, an das Fernsehsignal (12) binär codierte Werte zum Modifizieren der Basisadressen ($AB_1$, $AB_2$, $AB_3$; $GC_1$, $GC_2$, $GC_3$) anzufügen, die an den Enden der empfangsseitig weidergegebenen Bildbewegung übertragen werden.

16. Übertragungsnetz zur Durchführung des in einem der Ansprüche 14 und 15 definierten Verfahrens mit Zusammensetzungsmitteln (65, 66, 68) zum Erzeugen von Datenpaketen, die Elemente einer aus auf der Anzeigevorrichtung (18) wenigstens eines Empfangsgeräts (73) weiderzugebenden, aus Seiten zusammengesetzten Nachricht repräsentieren, einem Übertragungskanal und einem Empfangsgerät (73), das für den Empfang der Datenpakete und für ihre Interpretation zur Wiedergabe ausgestattet ist, wobei die Zusammensetzungsmittel (65, 66, 68) Mittel zum Erzeugen von Basisadressen ($AB_1$, $AB_2$, $AB_3$; $GC_1$, $GC_2$, $GC_3$), für die Auswahl von Speicherzonen (22; 23) sowie, je nach Fall, Mittel zum Modifizieren dieser Basisadressen in Abhängigkeit von einer Bewegung des empfangsseitig anzuzeigenden Bildes (Figur 10, 11) enthalten.

**Claims**

1. Method for displaying messages of the teletext type which are transmitted by a television-type signal (21) and are composed of pages displayed on the screen of a scanned-raster display device (18), on which the images corresponding to these pages are drawn by line-by-line scanning, the data representative of the elements of each page to be displayed on the screen being stored in a page memory (22) in the form of a binary code and being retrieved therefrom under the control of a time-base circuit (43) which is itself controlled by the synchronisation pulses forming part of the said television-type signal (21), the said method consisting in assigning the function of page memory to at least two zones (22) in a memory unit (19) and being characterised in that it further consists in conferring on each of the said zones a base address ($AB_1$, $AB_2$, $AB_3$) and an indication of an offset obtained from a status register (39), which allows the position of the start of the image to be chosen relative to the synchronisation signals of the time base, the said base address and the said indication of an offset identifying the said zone (22) uniquely, and in that, in order to retrieve the data arranged in the locations in the said zones (22), the method consists in sending to the memory unit (19) composite addresses of the base address ($AB_1$, $AB_2$, $AB_3$) of the memory zone (22) in question associated with the value of the address of a memory location from which, at a given moment, the data are to be retrieved by the said composite address for display (Figure 10).

2. Method according to claim 1, for displaying messages at least some pages of which contain at least a part composed of typographical message elements, which can be displayed selectively by means of at least two character generators (23) in which data for displaying typographical characters are stored, characterised in that the method consists in assigning the function of character generator to other memory zones (23) of the said memory unit (19), and in that the addresses retrieved from any one of the other zones (23) assigned to a page memory are composite addresses, especially of a base address ($GC_1$, $GC_2$, $GC_3$) and a code proper to the typographical element to be displayed.

3. Method according to either of claims 1 and 2, characterised in that, for the creation of images that are at least partially animated, it consists in altering selectively and periodically the base addresses ($AB_1$, $AB_2$, $AB_3$) identifying the said zones (22) assigned to the function of page memory in order to retrieve data periodically from different zones of the said memory unit (19), these zones (22) containing display data which are at least partly different.

4. Method according to claim 3, characterised in that, so that the animation of the images is a vertical movement of the image, the method consists in periodically altering the base address ($AB_1$, $AB_2$, $AB_3$) identifying a given zone (22) assigned to the page memory function, only by a numerical value, for example 80 octets, corresponding to the difference in the address values of the start and finish of a row of message elements to be displayed on the display device (18).

5. Method according to either of claims 3 and 4, characterised in that the frequency of changing of the base addresses ($AB_1$, $AB_2$, $AB_3$) is a multiple of from 1 to $n$ of the raster frequency of the scanning of the said display device (18).

6. Method according to any one of claims 3 to 5, characterised in that the alteration of the base address ($AB_1$, $AB_2$, $AB_3$) is executed after the repetition a predetermined number of times of a given base address to produce the repeated display of a given page before the display of an altered page.

7. Method according to any one of claims 1 to 6, characterised in that the alteration of the base address is adjustable locally, for example by means of keys (52, 53, 54) of a keyboard (51).

8. Method according to claim 1, characterised in that it further consists in offsetting the retrieval of the base address ($AB_1$, $AB_2$, $AB_3$) in time relative to the horizontal and/or vertical synchronisation of the scanning of the display device (18).

9. Apparatus for implementation of the method as defined in any one of claims 1 to 8, comprising a scanned-raster display device (18), at least one page memory (22), at least one character generator, means for temporarily storing data relative to a page in the page memory (22) and for retrieving those data from that memory (22) for display, where appropriate by means of the character generator (23), the said data being interpreted in processing means (35) which are connected by means of a decoder to the scanned-raster display device (18), the said apparatus having, in addition, a time-base circuit (43) the function of which is to coordinate and synchronise the transporting of the data in dependence on the scanning of the display device (18), this apparatus being characterised in that it comprises a composite memory unit (19) in which memory zones (20, 22, 23) are defined, at least some of these zones (22) being assigned to the function of page memory, and means (25, 51) for generating base addresses ($AB_1$, $AB_2$, $AB_3$) and an indication of an offset obtained from a status register (39), which allows the position of the start of the image to be chosen relative to the synchronisation signals of the time base (43) which are to define the start of a memory zone at a given instant in the operation of the apparatus (Figure 10).

10. Apparatus according to claim 9, characterised in that some of the said zones (23) are assigned to the function of character generators.

11. Apparatus according to either of claims 9 and 10, characterised in that it includes means (25, 51) for altering the base address ($AB_1$, $AB_2$, $AB_3$) of at least one zone (22) defined in the memory unit (19) in order to produce movement of the image on the display device (18).

12. Apparatus according to claim 11, characterised in that the said means for altering the base address comprise a keyboard (51) provided with at least one key (52, 53) for row-by-row and/or line-by-line movement of the image on the display device (18).

13. Apparatus according to either of claims 11 and 12, characterised in that the said means for altering the base address comprise a keyboard (51) provided with at least one key (53, 54) for offsetting the processing of the base address in time relative to the synchronisation data of the image on the display device (18).

14. Method of transmitting messages to be displayed on at least one scanned-raster display device (18), and including application of the method as defined in claims 2, 4, 5, 6, 7 and 8, the method consisting in adding to the said television-type signal (21), at the sending end, values in binary code representing base addresses ($AB_1$, $AB_2$, $AB_3$; $GC_1$, $GC_2$, $GC_3$) for the selection of memory zones (22; 23) used at the receiving end in a composite memory unit (19) (Figure 10).

15. Method of transmission according to claim 14, characterised in that it further consists in adding to the said television-type signal (21) values in binary code to alter the base addresses ($AB_1$, $AB_2$, $AB_3$; $GC_1$, $GC_2$, $GC_3$) transmitted for the purpose of animation of the image reproduced at the receiving end.

16. Transmission network for implementation of the method as defined in either of claims 14 and 15, comprising composition means (65, 66, 68) for generating packets of data representing elements of a message composed of pages to be displayed on the display device (18) of at least one receiver (73), a transmission channel and a receiver (73) equipped to receive the said packets of data and interpret them for display, the said composition means (65, 66, 68) including means for generating base addresses ($AB_1$, $AB_2$, $AB_3$; $GC_1$, $GC_2$, $GC_3$) for selecting memory zones (22; 23) as well as, where appropriate, means for altering these base addresses in dependence on an animation of the image to be displayed at the receiving end (Figures 10, 11).

## FIG.1

M →

N ↓

1

2          2

## FIG.2

Y →

X ↓

RANGÉE I →          3
          4     5

RANGÉE II →

          3     4     5

RANGÉE n →          4  3  5

CARACTERE I     CARACTERE II     CARACTERE n

0 055 167

**FIG.3**

LIGNE 1

LIGNE TL

6

**FIG.4**

SYNCHROTRAME

40 LIGNES

48 µs

64 µs

20 ms
312/313 LIGNES

ZM

ZV

23 LIGNES

SYNCHROTRAME

SYNCHRO
LIGNE

SYNCHRO
LIGNE

**FIG.5**

9   10   11   12   13

0 | 1 | 0 | 41 | B | 41 | 41 | B | 61

7

SYNCHRO
LIGNE

8   PREFIXE

MOT DE
SYNCRHO

DRAPEAU
PAGE

N°
PAGE

DONNÉES

SYNCHRO
LIGNE

7

**FIG.6**

14 b    OCT I         OCT II    14 a

ATTRIBUT       CODE ASCII

0 | 0 | 0 | 1 | 0 | 0 | 0 | 1 | 1 | 0 | 0 | 0 | 0 | 0 | 1

17    AUTRES
ATTR.

"A"   15

**FIG.7**

Px      Px+1    Px+2    Px+3

1 | 0 | 0 | 1 | 0 | 0 | 1 | 0 | 0 | 1 | 1 | 0

**FIG.8**

I — 10 LIGNES — 48
80 OCTETS — 2 OCTETS — 49
II — 1 LIGNE — 2 OCTETS — 50
120 OCTETS
III — 1 LIGNE — 2 OCTETS
120 OCTETS
IV — 80 OCTETS — 2 OCTETS

ZM

ZRV — ZONE VISUALISÉE — ZONE HORS ECRAN

**FIG.9**

I { A B C ------- r s t u -----

II
III

IV { Z U -----

**FIG.10**

**FIG.11**

RECEPTEUR
ANTIOPE

(FIG.10)